# EUROPÄISCHE PATENTSCHRIFT

(11) **EP 3 375 684 B1**
(45) Veröffentlichungstag und Bekanntmachung des Hinweises auf die Patenterteilung: **07.10.2020**
(21) Anmeldenummer: 17160866.4
(22) Anmeldetag: 14.03.2017
(51) Int. Cl.: B61B 1/00, B65G 35/00, B65G 65/00, B64F 1/36

(54) **FÖRDERSYSTEM UND VERFAHREN ZUM TRANSPORTIEREN VON STÜCKGUTTEILEN**
CONVEYING SYSTEM AND METHOD FOR TRANSPORTING PIECE GOOD PARTS
SYSTÈME DE TRANSPORT ET PROCÉDÉ DE TRANSPORT DE MARCHANDISES AU DÉTAIL

(43) Veröffentlichungstag der Anmeldung: 19.09.2018
(73) Patentinhaber: BEUMER Group GmbH & Co. KG, 59269 Beckum (DE)
(72) Erfinder: Heitplatz, Heino, 48317 Drensteinfurt (DE); Jesper, Jan Josef, 33129 Delbrück (DE)
(74) Vertreter: Philipp, Matthias

(56) Entgegenhaltungen:
- EP-A1- 0 630 836
- WO-A1-03/026976
- WO-A2-01/05685
- DE-A1-102015 001 540
- JP-A- S5 831 815
- US-A- 3 662 906
- US-B1- 6 540 064

## Beschreibung

Die Erfindung betrifft ein Fördersystem zum Transportieren von Stückgutteilen, mit einer oder mehreren Fahreinheiten, die entlang einer Förderbahn verfahrbar sind, einer Aufgabeeinrichtung zum Aufgeben von Transportbehältern auf Fahreinheiten und einer Abgabeeinrichtung zum Abgeben von Transportbehältern von Fahreinheiten, wobei mit den Transportbehältern jeweils ein Stückgutteil transportiert werden kann, beispielsweise zum Transportieren und Sortieren von Fluggepäck auf Flughäfen, und auf ein Verfahren zum Transportieren von Stückgutteilen unter Verwendung eines derartigen Fördersystems.

Es sind derartige Systeme bekannt, bei denen Transportbehälter in Form sogenannter "totes" verwendet werden, die das Stückgut aufnehmen und ihrerseits auf Förderwagen mit Seitenwänden und vorderen und hinteren Begrenzungen transportiert werden. WO 01056851 offenbart ein Fördersystem zum Transportieren von Stückgutteilen mit mindestens einem Transportbehälter mit einer Länge und einer Breite, die kleiner als die Länge ist, mit einer oder mehreren Fahreinheiten, die jeweils ein Lastaufnahmemittel zum Aufnehmen eines Transportbehälters aufweisen, wobei die Fahreinheiten entlang einer Förderbahn in oder entgegen einer Förderrichtung verfahrbar sind, mit mindestens einer Aufgabeeinrichtung zum Aufgeben eines leeren oder mit einem Stückgutteil beladenen Transportbehälters auf das Lastaufnahmemittel einer Fahreinheit, und mindestens einer Abgabeeinrichtung zum Abgeben eines leeren oder mit einem Stückgutteil beladenen Transportbehälters von einem Lastaufnahmemittel einer Fahreinheit, wobei jeweils ein Transportbehälter auf einem Lastaufnahmemittel einer Fahreinheit mit seiner Längserstreckung in Förderrichtung aufnehmbar ist, wobei jede Fahreinheit mit ersten Haltemitteln und jeder Transportbehälter mit zweiten Haltemitteln versehen ist, und die ersten Haltemittel zum Zusammenwirken entweder mit den zweiten Haltemitteln eines in Förderrichtung aufgenommenen Transportbehälters und zum Beschränken einer Bewegung eines aufgenommenen Transportbehälters in Förderrichtung relativ zu dem Lastaufnahmemittel auf ein vorgegebenes Maß ausgebildet sind.

Nachteilig ist allerdings, dass die Durchsatzkapazität eines solchen Systems relativ gering ist, da jeder Förderwagen mit einem Transportbehälter bzw. "tote" nur jeweils ein Gepäckstück transportieren kann. Die Aufgabe der Erfindung besteht darin, hier Abhilfe zu schaffen und das System flexibler zu machen, um die Durchsatzleistung zu steigern.

Diese Aufgabe wird erfindungsgemäß gelöst durch ein Fördersystem zum Transportieren von Stückgutteilen, mit einer oder mehreren Förder- oder Fahreinheiten, die jeweils ein Lastaufnahmemittel zum Aufnehmen eines Transportbehälters aufweisen, wobei die Fahreinheiten entlang einer Förderbahn in oder entgegen einer Förderrichtung verfahrbar sind, mit mindestens einer Aufgabeeinrichtung zum Aufgeben eines leeren oder mit einem Stückgutteil beladenen Transportbehälters auf das Lastaufnahmemittel einer Fahreinheit, und mindestens einer Abgabeeinrichtung zum Abgeben eines leeren oder mit einem Stückgutteil beladenen Transportbehälters von einem Lastaufnahmemittel einer Fahreinheit, wobei die Transportbehälter erste, oder kleine, Transportbehälter mit einer ersten Länge und einer ersten Breite, die kleiner als die erste Länge ist, umfassen, von denen jeweils mindestens zwei auf einem Lastaufnahmemittel einer Fahreinheit mit ihrer Längserstreckung quer zur Förderrichtung nebeneinander aufnehmbar sind, wobei jede Fahreinheit mit ersten Haltemitteln und jeder kleine Transportbehälter mit zweiten Haltemitteln versehen ist, und die ersten Haltemittel zum Zusammenwirken mit den zweiten Haltemitteln eines oder mehrerer quer zur Fördereinrichtung aufgenommener kleinen Transportbehälter und zum Beschränken einer Bewegung eines kleinen Transportbehälters in oder quer zur Förderrichtung und bevorzugt auch einer Drehbewegung relativ zu dem Lastaufnahmemittel auf ein vorgegebenes Maß ausgebildet sind.

Es ist vorgesehen, dass die Transportbehälter auch zweite, oder große, Transportbehälter mit einer zweiten Länge und einer zweiten Breite, die kleiner als die zweite Länge ist, wobei die zweite Länge größer als die erste Länge ist und die zweite Breite größer als die erste Breite sein kann, umfassen, von denen jeweils einer auf einem Lastaufnahmemittel einer Fahreinheit mit ihrer Längserstreckung in Förderrichtung aufnehmbar ist, wobei die ersten Haltemittel zum Zusammenwirken entweder mit den zweiten Haltemitteln eines oder mehrerer quer zur Fördereinrichtung aufgenommener kleiner Transportbehälter oder mit den zweiten Haltemitteln eines in Förderrichtung aufgenommenen großen Transportbehälters und zum Beschränken einer Bewegung eines Transportbehälters in oder quer zur Fördereinrichtung und bevorzugt auch einer Drehbewegung relativ zu dem Lastaufnahmemittel auf ein vorgegebenes Maß ausgebildet sind. Die zweite Breite ist bevorzugt kleiner als die erste Länge.

Das genannte Maß kann einige cm oder Winkelgrade betragen oder bei formschlüssiger Aufnahme praktisch gleich Null sein.

Die Transportbehälter haben bevorzugt einen rechteckigen Grundriss und eine konkave Oberseite.

Bei der Erfindung wird durch die Verwendung von zwei unterschiedlichen Längen oder Größen von Transportbehältern der Vorteil erreicht, dass ein oder mehrere, insbesondere zwei kleine Transportbehälter oder aber nur ein großer Transportbehälter auf einer Fahreinheit transportiert werden kann, so dass nicht nur ein Stückgutteil je Fahreinheit transportiert werden kann, sondern bei Bedarf mehrere, insbesondere zwei Stückgutteile je Fahreinheit.

Obwohl die Größe der Transportbehälter bzw. "totes" grundsätzlich beliebig wählbar ist, hat es sich als vorteilhaft erwiesen, wenn die erste Breite zwischen 20% und 80% oder zwischen 40% und 60% der zweiten Länge beträgt. Weiterhin kann es vorteilhaft sein, wenn die erste Länge zwischen 80% und 200% oder zwischen 120% und 150% der zweiten Breite beträgt.

Die ersten Haltemittel können zum formschlüssigen Zusammenwirken mit den zweiten Haltemitteln ausgebildet sein.

Die ersten Haltemittel können von dem Lastaufnahmemittel vertikal nach oben abstehende erste Halte- oder Rastelemente umfassen, und die zweiten Haltemittel können zu den Halte- oder Rastelementen komplementär geformte zweite Halte- oder Rastelemente umfassen. Beispielsweise können auf dem Lastaufnahmemittel eine Anzahl von kegelförmigen Aufnahmen als erste Haltemittel vorgesehen sein, und an den Transportbehältern auf der Unterseite entsprechende kegelförmige Ausnehmungen. Anzahl und Anordnung der Aufnahmen und Ausnehmungen sind zweckmäßigerweise so gewählt, dass sich zwei oder mehr kleine Transportbehälter in einer Anordnung quer zur Förderrichtung aufnehmen lassen oder ein großer Transportbehälter, der mit seiner Längserstreckung in Förderrichtung angeordnet ist.

Die ersten Haltemittel können in Förderrichtung verlaufende Seitenwangen umfassen, die formschlüssig mit den Transportbehältern zusammenwirken können, etwa teilweise in die Transportbehälter eingreifen können, oder deren lichter Abstand größer als die erste Länge oder die zweite Breite ist, und zwar das größere dieser beiden Maße. In diesem Fall können gegenüberliegende Außenflächen der Transportbehälter die zweiten Haltemittel bilden.

Die ersten Haltemittel können quer zur Förderrichtung verlaufende Begrenzungswände umfassen, die formschlüssig mit den Transportbehältern zusammenwirken können, ewta teilweise in die Transportbehälter eingreifen können, oder deren lichter Abstand größer als ein Mehrfaches, insbesondere Zweifaches, der ersten Breite oder größer als die zweite Länge ist, und zwar das größere dieser beiden Maße. Auch in diesem Fall können gegenüberliegende Außenflächen der Transportbehälter die zweiten Haltemittel bilden.

Jede Fahreinheit kann einen Antriebsmotor zur Bewegung in oder entgegen der Förderrichtung aufweisen.

Die Förderbahn kann mit Antriebsmitteln zum Bewegen der Fahreinheiten in oder entgegen der Förderrichtung versehen sind. Die Antriebsmittel können Linearantriebe und/oder selektiv antreibbare, abschnittsweise endlos umlaufende Förderbänder umfassen, auf denen die Fahreinheiten bewegt werden.

Die Aufgabeeinrichtung kann ein Paar von parallelen, einander mit Abstand gegenüberliegenden und oberhalb der Förderbahn angeordneten ersten Zuführbahnen aufweisen, auf denen kleine Transportbehälter quer zur Förderrichtung ausgerichtet in oder entgegen der Förderrichtung förderbar und an einem Endbereich der ersten Zuführbahnen auf eine darunter fahrende Fahreinheit aufgebbar sind, und ein Paar von parallelen, einander mit Abstand gegenüberliegenden, unter und zwischen den ersten Zuführbahnen und oberhalb der Förderbahn angeordneten zweiten Zuführbahnen, auf denen große Transportbehälter in Förderrichtung ausgerichtet in oder entgegen der Förderrichtung förderbar und an den Endbereichen auf eine darunter fahrende Fahreinheit aufgebbar sind.

Die Abgabeeinrichtung kann ein Paar von parallelen, einander mit Abstand gegenüberliegenden und oberhalb der Förderbahn angeordneten ersten Zuführbahnen aufweisen, auf denen kleine Transportbehälter quer zur Förderrichtung ausgerichtet in oder entgegen der Förderrichtung förderbar und an einem Endbereich der ersten Zuführbahnen von einer darunter fahrenden Fahreinheit abgebbar sind, und ein Paar von parallelen, einander mit Abstand gegenüberliegenden, unter und zwischen den ersten Zuführbahnen und oberhalb der Förderbahn angeordneten zweiten Zuführbahnen, auf denen große Transportbehälter in Förderrichtung ausgerichtet in oder entgegen der Förderrichtung förderbar und an den Endbereichen von einer darunter fahrenden Fahreinheit abgebbar sind.

Obwohl eine einzige Auf- und Abgabeeinrichtung vorgesehen sein könnte, ist bevorzugt mindestens eine Auf- und mindestens eine Abgabeeinrichtung vorhanden.

Die Zuführbahnen können als Band- bzw. Gurtförderer, insbesondere abschnittsweise, mit jeweils endlos umlaufenden Transportbändern oder -gurten, oder als Rollenförderer ausgebildet sein.

Die zweiten Zuführbahnen können in einem Übergangsbereich an einem Übergangspunkt auf eine gleiche Förderhöhe wie die ersten Zuführbahnen geführt sein, so dass kleine und große Transportbehälter auf die ersten Zuführbahnen förderbar und von dort auf eine darunter fahrende Fahreinheit abgebbar sind, oder in umgekehrter Richtung.

Seitlich außerhalb der ersten Zuführbahnen können Leiteinrichtungen für quer angeordnete ldeine Transportbehälter angeordnet sein, deren gegenseitiger Abstand größer als die erste Länge ist.

Innerhalb der oder zwischen den zweiten Zuführbahnen können Leiteinrichtungen für in Förderrichtung angeordnete große Transportbehälter angeordnet sein, deren gegenseitiger Abstand größer als die zweite Breite ist.

Es kann vorgesehen sein, dass die ersten Zuführbahnen ab dem Übergangspunkt in Richtung auf ein freies Ende abwärts geneigt sind und an einem Endabschnitt seitlich benachbart zu einem Lastaufnahmemittel einer darunter fahrenden Fahreinheit angeordnet sind, wobei eine Förderoberfläche der Zuführbahnen in Höhe des Lastaufnahmemittels oder darüber angeordnet ist. Hierbei kann vorgesehen sein, wenn die Fahreinheiten Seitenwangen haben, dass die ersten Zuführbahnen im Bereich des Endabschnitts innerhalb der bzw. zwischen den Seitenwangen einer Fahreinheit angeordnet sind.

Das Fördersystem weist weiterhin mindestens eine Beladeeinrichtung zum Beladen von Stückgutteilen auf Transportbehälter auf, und mindestens eine Entladeeinrichtung zum Entladen von Stückgutteilen von Transportbehältern. Die Beladeeinrichtung und/oder die Entladeeinrichtung können einen oder jeweils einen Sortierförderer umfassen.

In verfahrensmäßiger Hinsicht bezieht sich die Erfindung auf ein Verfahren zum Transportieren von Stückgutteilen unter Verwendung eines Fördersystems gemäß der Erfindung, wobei an einer Aufgabeeinrichtung mindestens ein erster, oder kleiner, Transportbehälter, bevorzugt bis zu zwei oder drei davon, in Ausrichtung quer zur Förderrichtung auf ein Lastaufnahmemittel einer Fahreinheit aufgegeben wird, die Fahreinheit zu einer Abgabeeinrichtung gefahren und an dieser der mindestens eine Transportbehälter abgegeben wird. Es ist vorgesehen, dass an der Aufgabeeinrichtung entweder mindestens ein kleiner Transportbehälter in Ausrichtung quer zur Förderrichtung oder ein zweiter oder großer Transportbehälter in Ausrichtung in Förderrichtung auf ein Lastaufnahmemittel einer Fahreinheit aufgegeben wird, die Fahreinheit zu einer Abgabeeinrichtung gefahren und an dieser der mindestens eine Transportbehälter abgegeben wird.

Zweckmäßigerweise ist vorgesehen, dass in Abhängigkeit von einem Gesamtgewicht einer mit mindestens einem Transportbehälter beladenen Fahreinheit zur Vermeidung einer Gewichtsüberschreitung nur ein kleiner Transportbehälter auf eine Fahreinheit aufgegeben wird. Hierbei kann vorgesehen sein, dass das Gewicht der auf die kleinen Transportbehälter zu ladenden oder geladenen Stückgutteile oder das Gewicht der mit einem Stückgutteil beladenen kleinen Transportbehälter vor dem Aufgeben auf eine Fahreinheit erfasst wird.

Die Erfindung wird nachfolgend anhand eines Ausführungsbeispiels unter Bezugnahme auf eine Zeichnung erläutert, wobei
Fig. 1 bis 3 eine Seiten-, Drauf- und perspektivische Ansicht einer Fahreinheit zum Aufnehmen von Transportbehältern zeigen,
Fig. 4 bis 6 eine Seiten-, Drauf-, perspektivische Ansicht einer mit zwei kleinen Transportbehältern beladenen Fahreinheit zeigen,
Fig. 7 bis 9 eine Seiten-, Drauf- und perspektivische Ansicht einer mit einem kleinen Transportbehälter beladenen Fahreinheit zeigen,
Fig. 10 bis 12 eine Seiten-, Drauf- und perspektivische Ansicht einer mit einem großen Transportbehälter beladenen Fahreinheit zeigen,
Fig. 13 eine perspektivische Ansicht einer Auf- bzw. Abgabeeinrichtung zum Aufgeben von Transportbehältern auf Fahrwagen bzw. umgekehrt zeigt,
Fig. 14 einen vergrößerten Teilbereich der Auf- bzw. Abgabeeinrichtung zeigt,
Fig. 15 und 16 vergrößerte Teilbereiche der Auf- bzw. Abgabeeinrichtung im Zusammenhang mit unterschiedlichen Transportbehältern zeigen,
Fig. 17 und 18 Seitenansichten der Auf- bzw- Abgabeeinrichtung in unterschiedlichen Phasen eines Auf- bzw. Abgabevorgangs zeigen, und
Fig. 19 eine schematische Querschnittsansicht einer Auf- bzw. Abgabeeinrichtung mit einer darunter befindlichen Fahreinheit zeigt.

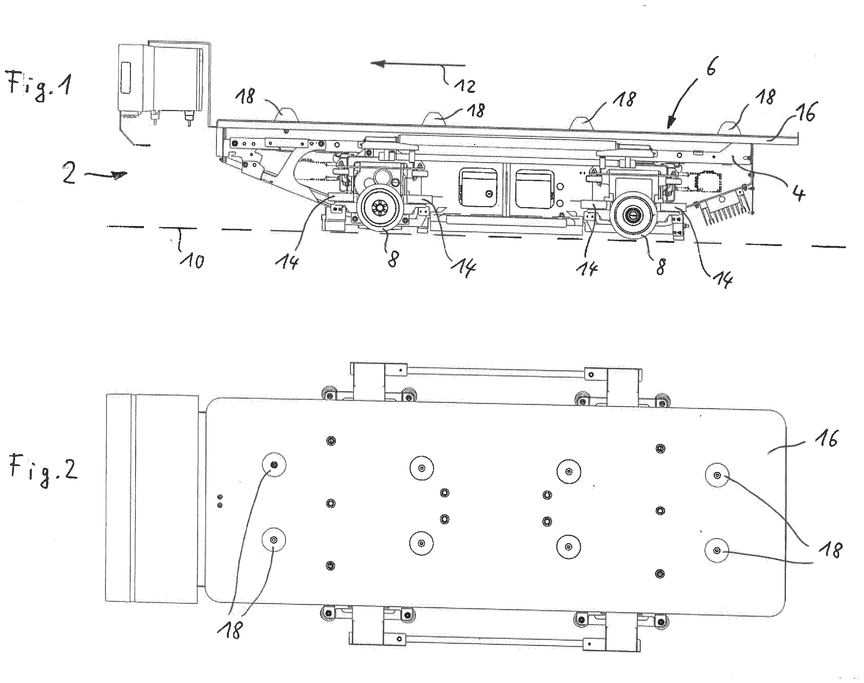

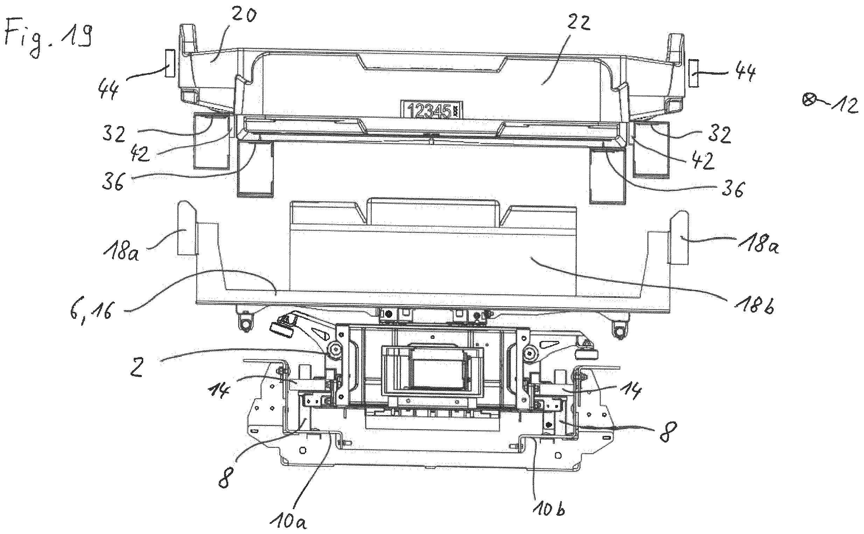

Eine in Figur 1 bis 3 dargestellte Fahreinheit 2 weist ein Fahrgestell 4 und ein von diesem getragenes Lastaufnahmemittel 6 zum Aufnehmen von Transportbehältern auf. An dem Fahrgestell 4 ist ein nicht im einzelnen dargestellter Antriebsmotor mit Steuerung und Getriebe angeordnet, der in Antriebsverbindung mit Laufrädern 8 steht, die auf einer Förderbahn, schematisch mit 10 angedeutet, abrollen. Die Förderbahn kann zwei parallele Fahrschienen 10a, b (Fig. 19) umfassen. Die Fahreinheit 2 kann in oder entgegen einer Förderrichtung 12 angetrieben werden. Zur seitlichen Führung quer zur Förderrichtung 12 ist die Fahreinheit 2 vor und hinter jedem Laufrad 8 mit Führungsrädern 14 versehen, deren Drehachse senkrecht zu einer Drehachse der Laufräder 8 ist. Insbesondere sind die Drehachsen der Laufräder 8 bevorzugt horizontal, und die Drehachsen der Führungsräder 14 bevorzugt vertikal. Jeweils ein Paar Laufräder 8 kann auf einer gemeinsamen Drehachse mit insgesamt vier Führungsrädern 14 auf einem Drehgestell angeordnet und um eine vertikale Achse drehbar sein.

In dem dargestellten Ausführungsbeispiel ist das Lastaufnahmemittel 6 durch eine ebene Platte 16 gebildet, auf der erste Haltemittel in Form von acht rasterförmig angeordneten, kegel- oder kegelstumpfförmigen Halteelementen 18 angeordnet sind. Die Halteelemente 18 sind beispielsweise mit der Platte 16 verschraubt.

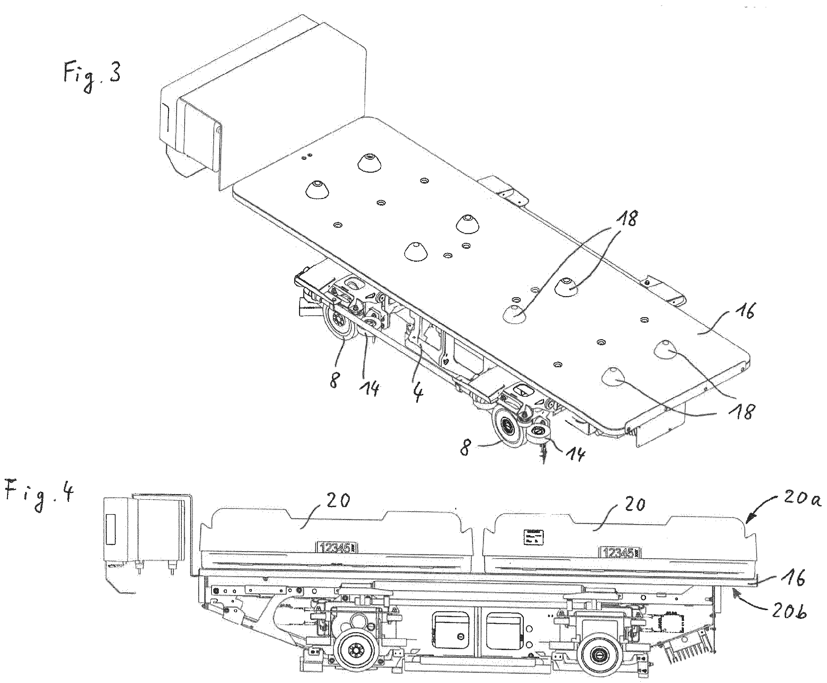

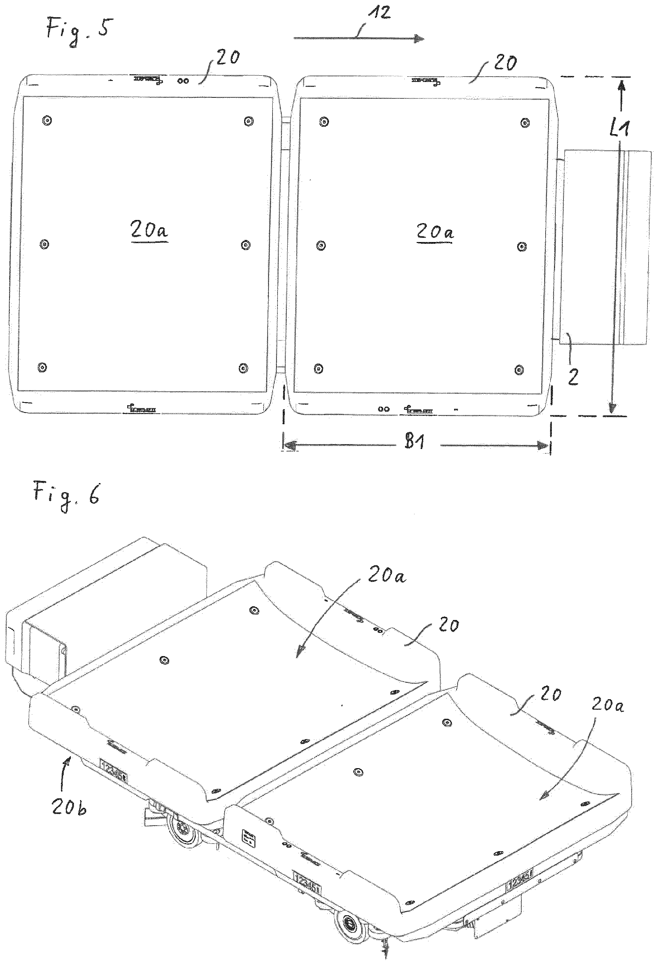

Figur 4 bis 6 zeigen die Fahreinheit 2 beladen mit zwei kleinen Transportbehältern 20. Jeder kleine Transportbehälter 20 stellt eine erste Größe von zwei unterschiedlichen Größen von Transportbehältern dar, die auf einer Fahreinheit 2 aufnehmbar sind, und weist eine erste Länge L1 und eine erste Breite B1 auf, die kleiner als die erste Länge L1 ist. Jeder kleine Transportbehälter 20 weist eine Oberseite 20a zum Aufnehmen eines Stückgutteils und eine dieser gegenüberliegende Unterseite 20b auf, an der nicht dargestellte zweite Haltemittel angeordnet sind. Die zweiten Haltemittel sind zum Zusammenwirken, insbesondere zum formschlüssigen Zusammenwirken, mit den ersten Haltemitteln 18 ausgebildet und in der dargestellten Ausführung in Form von vier rasterförmig angeordneten, kegel- oder kegelstumpfförmigen Vertiefungen ausgebildet. In dem in Figur 4 bis 6 dargestellten aufgenommenen Zustand sind jeweils vier erste Halteelemente 18 von vier entsprechenden zweiten Halteelementen in Form von kegelförmigen Vertiefungen eines Transportbehälters 20 aufgenommen, so dass dieser in horizontaler Richtung gegen Verschieben und Verdrehen gesichert ist.

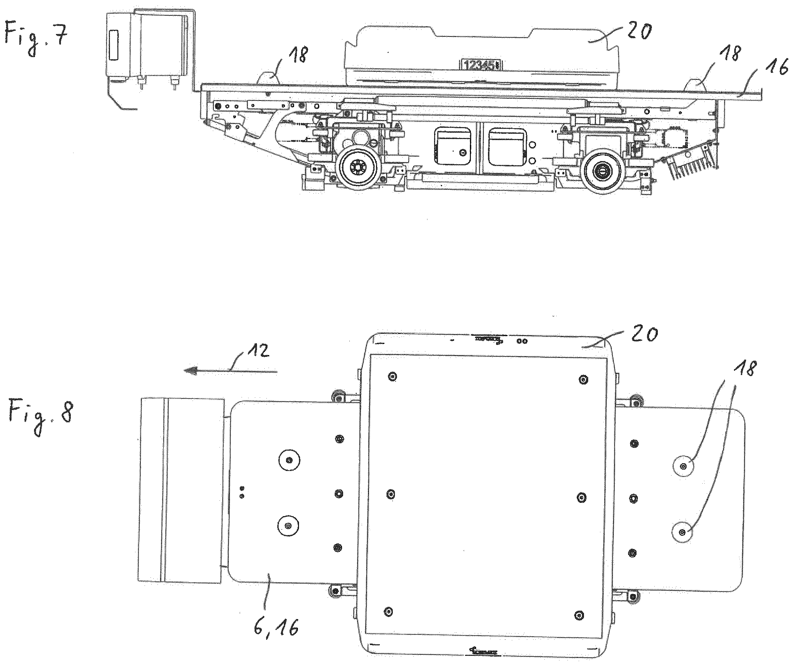

Figur 7 bis 9 zeigen eine ebenfalls mögliche Aufnahme eines einzelnen kleinen Transportbehälters 20 auf einer Fahreinheit 2, wobei der kleine Transportbehälter 20 beispielsweise mittig auf dem Lastaufnahmemittel 6 angeordnet ist. Alternativ könnte der Transportbehälter 20 in Fahrtrichtung gesehen vorn oder hinten auf dem Lastaufnahmemittel 6 angeordnet sein. In jedem Falle ist ein kleiner oder sind zwei kleine Transportbehälter 20 bevorzugt quer aufgenommen, wobei eine Längserstreckung des oder der Transportbehälters quer zur Förderrichtung 12 ausgerichtet ist.

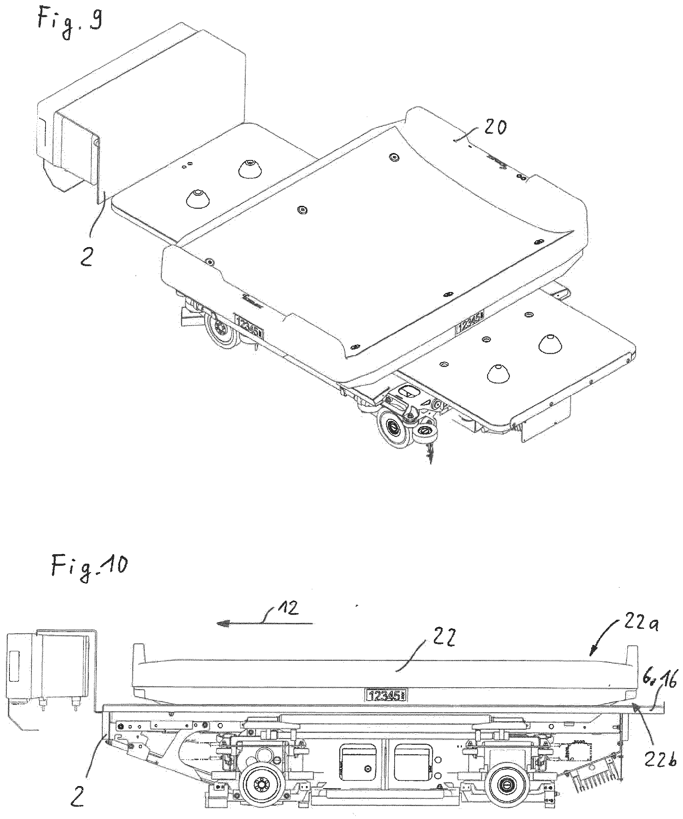

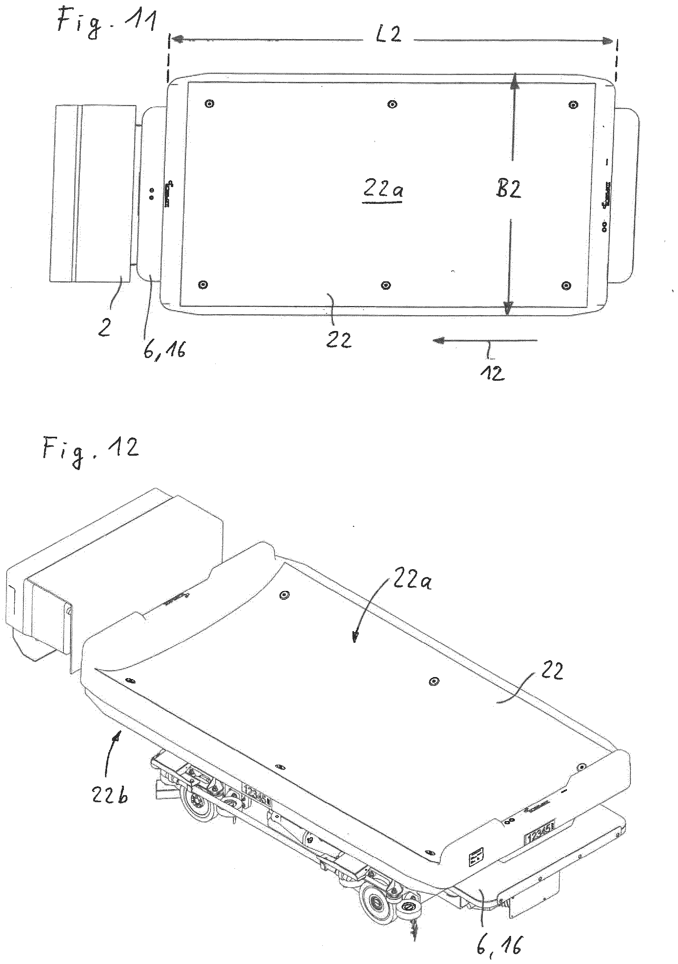

Figur 10 bis 12 erläutern die Aufnahme eines einzelnen großen Transportbehälters 22 auf einer Fahreinheit 2. Der große Transportbehälter 22 stellt eine zweite Größe von zwei unterschiedlichen Größen von Transportbehältern dar, die auf einer Fahreinheit 2 aufgenommen und transportiert werden können. Der große Transportbehälter 22 weist eine Oberseite 22a zur Aufnahme von großen Stückgutteilen sowie eine gegenüberliegende Unterseite 22b auf, die auf dem Lastaufnahmemittel 6 aufliegt. Der große Transportbehälter 22 hat eine zweite Länge L2 und eine zweite Breite B2. An seiner Unterseite 22b weist der große Transportbehälter 22 zweite Haltemittel zum Zusammenwirken mit den ersten Haltemitteln 18 des Lastaufnahmemittels 6 auf, wobei die zweiten Haltemittel in der dargestellten Ausführungsform aus acht rasterförmig angeordneten, kegel- bzw. kegelstumpfförmigen Vertiefungen bestehen, die mit den ersten Halteelementen 18 formschlüssig zusammenwirken.

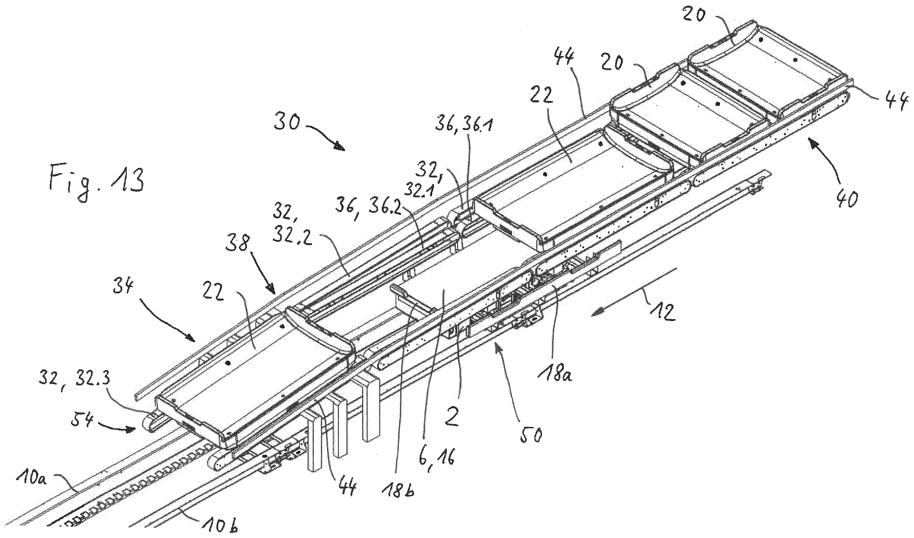

Figur 13 bis 19 dienen der Erläuterung des Aufbaus und der Arbeitsweise einer Aufgabe- oder Abgabeeinrichtung 30 zum Aufgeben von Transportbehältern auf eine Fahreinheit und/oder zum Abgeben von Transportbehältern von einer Fahreinheit, wobei Fahreinheiten in einer Ausführung mit Seitenwangen 18a und vorderen und hinteren Begrenzungswänden 18b als erste Haltemittel dargestellt sind.

Die Auf- bzw. Abgabeeinrichtung 30 weist ein Paar von parallelen, einander mit Abstand gegenüberliegenden und oberhalb der Förderbahn 10 angeordneten ersten Zuführbahnen 32 auf, auf denen kleine Transportbehälter 20 quer zur Förderrichtung 12 ausgerichtet in oder entgegen der Förderrichtung 12 förderbar sind und an einem abwärts geneigten Endbereich 34 auf eine darunter fahrende Fahreinheit 2 abgebbar oder umgekehrt von dieser aufnehmbar sind. Die ersten Zuführbahnen 32 umfassen abschnittsweise gebildete Bandförderer 32.1, 32.2, 32.3, die selektiv antreibbar sind und jeweils ein Paar von endlos umlaufenden Förderbändern aufweisen.

Weiterhin weist die Auf- bzw. Abgabeeinrichtung 30 ein Paar von parallelen, einander mit Abstand gegenüberliegenden, unter und zwischen den ersten Zuführbahnen 32 und oberhalb der Förderbahn 10 angeordneten zweiten Zuführbahnen 36 auf, auf denen große Transportbehälter 22 in Förderrichtung 12 ausgerichtet in oder entgegen der Förderrichtung 12 förderbar sind und an dem Endbereich 34 auf eine darunter fahrende Fördereinheit 2 abgebbar sind. Die zweiten Zuführbahnen 36 umfassen abschnittsweise gebildete Bandförderer 36.1, 36.2, die selektiv antreibbar sind und jeweils ein endlos umlaufendes Förderband aufweisen.

In dem dargestellten Ausführungsbeispiel sind die großen Transportbehälter 22 nicht unmittelbar von den zweiten Zuführbahnen 36 auf eine Fahreinheit 2 abgebbar bzw. umgekehrt von dieser zu übernehmen, sondern die zweiten Zuführbahnen 36 sind in dem Endbereich 34 an einem Übergangspunkt 38 auf eine gleiche Förderhöhe wie die ersten Zuführbahnen 32 geführt, so dass kleine und große Transportbehälter 20, 22 auf die in dem Endbereich 34 angeordneten ersten Zuführbahnen 32 förderbar sind, oder umgekehrt, und von den ersten Zuführbahnen 32 auf eine darunter fahrende Fahreinheit 2 abgebbar sind, oder umgekehrt.

Die Auf- bzw. Abgabeeinrichtung 30 umfasst somit drei unterschiedliche Bereiche, in denen sich die ersten und zweiten Zuführbahnen 32, 36 erstrecken. In einem Transportbereich 40, der sich entgegengesetzt zu dem Endbereich 34 über eine beliebige Länge erstrecken kann und eine Verbindung zu weiteren Auf- bzw. Abgabeeinrichtungen, Be- und Entladeeinrichtungen für Stückgutteile, Speicherstationen für Transportbehälter, Verzweigungen usw. bilden kann, verlaufen die zweiten Zuführbahnen 36 wie erläutert innerhalb und unterhalb der ersten Zuführbahnen 32. Der gegenseitige Abstand der zweiten Zuführbahnen 36 ist so auf die zweite Breite B2 der großen Transportbehälter 22 abgestimmt, dass diese mit ihren längsseitigen Randbereichen auf den zweiten Zuführbahnen 36 aufliegen und von diesen gesteuert in oder entgegen der Förderrichtung 12 bewegt werden können. Um zu verhindern, dass die großen Transportbehälter 22 in seitlicher Richtung oder quer zur Förderrichtung 12 verrutschen, sind zwischen den zweiten Zuführbahnen 36 und den weiter außen und oben liegenden ersten Zuführbahnen 32 seitliche Führungselemente 42 in Form von Führungsleisten o. Ä. angebracht, deren gegenseitiger Abstand etwas größer als die zweite Breite B2 ist.

Auf den ersten Zuführbahnen 32 sind die kleinen Transportbehälter 20 in einer quer zur Förderrichtung 12 ausgerichteten Anordnung aufnehmbar und transportierbar, wobei die kleinen Transportbehälter 20 mit ihren in Breitenrichtung verlaufenden vorderen und hinteren Enden auf den ersten Zuführbahnen 32 aufliegen, deren gegenseitiger Abstand auf die erste Länge L1 der kleinen Transportbehälter 20 abgestimmt ist. Um zu verhindern, dass die kleinen Transportbehälter 20 in seitlicher Richtung oder quer zur Förderrichtung 12 verrutschen, sind seitlich benachbart und etwas oberhalb einer Förderoberfläche der ersten Zuführbahnen 32 seitliche Führungselemente 44 in Form von Führungsleisten o. Ä. angebracht, deren gegenseitiger Abstand etwas größer als die erste Länge L1 der kleinen Transportbehälter 20 ist.

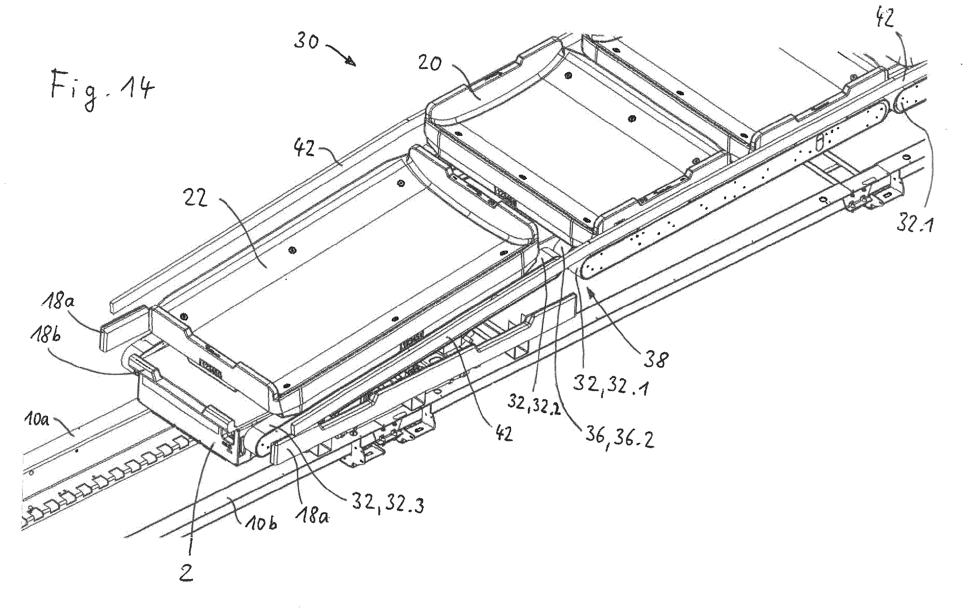

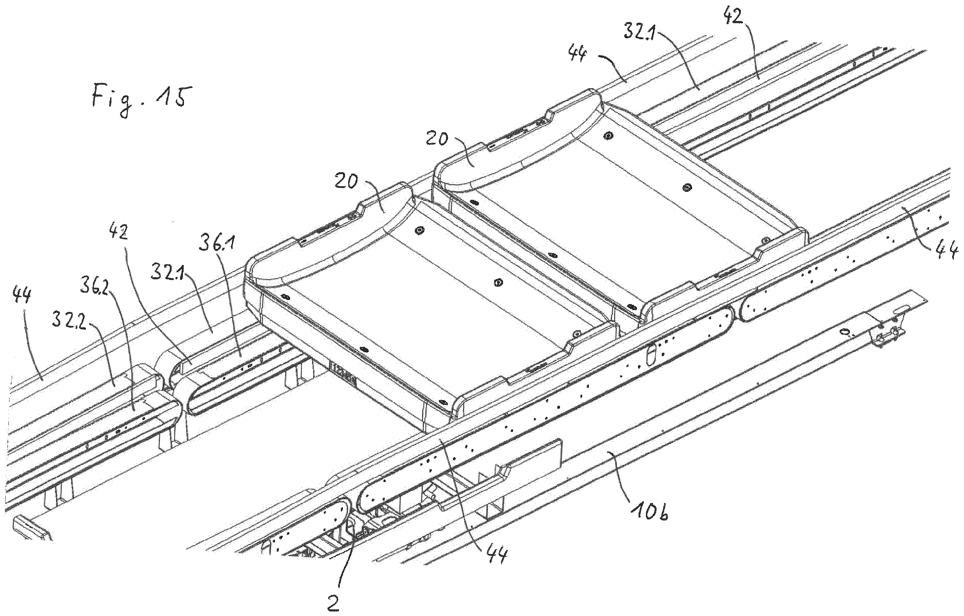

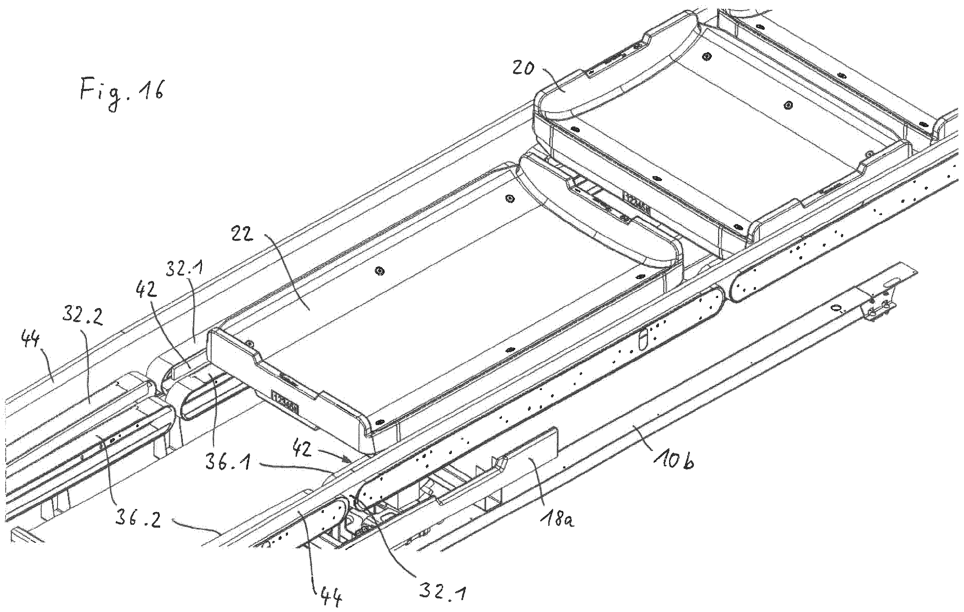

Fig. 13 zeigt den Transport unterschiedlicher Transportbehälter 20, 22, während Fig. 15 den Transport von zwei kleinen Transportbehältern 20 auf den ersten Zuführbahnen 32 zeigt, und Fig. 14 und 16 den Transport bzw. die Auf-/Abgabe auch eines großen Transportbehälters 22 erläutern.

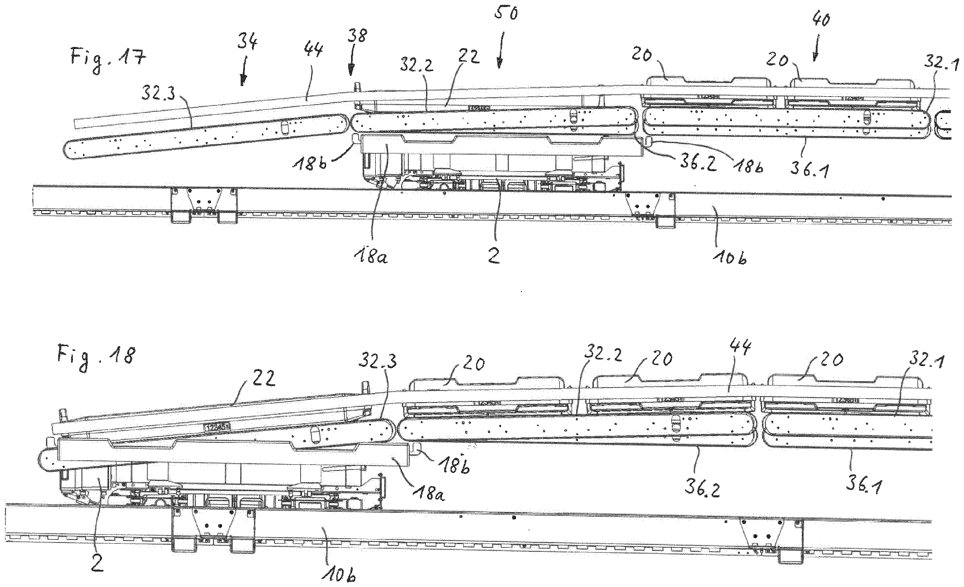

Fig. 17, 18 zeigen zwei zeitlich aufeinanderfolgende Phasen der Aufgabe eines großen Transportbehälters 22 auf eine Fahreinheit 2. Während der Aufgabe auf die Lastaufnahmeeinheit werden der jeweilige kleine oder große Transportbehälter 20, 22 und die Fahreinheit 2 mit gleicher Geschwindigkeit und in Ausrichtung senkrecht übereinander bewegt. Dabei wird der Transportbehälter senkrecht von oben auf das Lastaufnahmeelement aufgesetzt. Der Abgabevorgang verläuft umgekehrt.

Zwischen dem Transportbereich 40 und dem Endbereich 34 befindet sich ein Übergangsbereich 50, der an dem Übergangspunkt 38 endet und innerhalb dessen die ersten und zweiten Zuführbahnen 32, 36 in Höhenrichtung zueinander geführt sind, bis ihre Förderoberflächen an dem Übergangspunkt 38 auf einer gleichen Höhe liegen. An dem Übergangspunkt 38 enden bzw. beginnen die zweiten Zuführbahnen 36.

Anschließend an den Übergangsbereich 50 weist die Auf- bzw. Abgabeeinrichtung 30 den genannten Endbereich 34 auf, der zweckmäßigerweise in Richtung der Förderbahn 10 abwärts geneigt ist. Die ersten Zuführbahnen 32 erstrecken sich bis zu einem bzw. ab einem freien Ende 54 des Endbereichs 34.

Fig. 19 zeigt schematisch einen Querschnitt mit einem kleinen, quer angeordneten und auf den ersten Zuführbahnen 32 bewegten Transportbehälter 20 und einem großen, in Förderrichtung 12 angeordneten und auf den zweiten Zuführbahnen 36 bewegten Transportbehälter 22.

### Bezugszeichenliste

- 2: Fahreinheit
- 4: Fahrgestell
- 6: Lastaufnahmemittel
- 8: Laufrad
- 10: Förderbahn
- 10a, b: Fahrschiene
- 12: Förderrichtung
- 14: Führungsrad
- 16: Platte
- 18: erstes Haltemittel (Aufnahmeelement)
- 18a: Seitenwange
- 18b: Begrenzungswand
- 20: kleiner Transportbehälter
- 20a: Oberseite
- 20b: Unterseite
- 22: großer Transportbehälter
- 22a: Oberseite
- 22b: Unterseite
- 30: Auf- bzw. Abgabeeinrichtung
- 32: erste Zuführungsbahn
- 32.1, 32.2, 32.3: Abschnitte (von 32)
- 34: Endbereich
- 36: zweite Zuführungsbahn
- 36.1, 36.2: Abschnitte (von 36)
- 38: Übergangspunkt
- 40: Transportbereich
- 42, 44: seitliches Führungselement (Leiteinrichtung)
- 50: Übergangsbereich
- 54: freies Ende (von 34)
- L1: erste Länge
- B1: erste Breite
- L2: zweite Länge
- 132: zweite Breite

## Patentansprüche

1. Fördersystem zum Transportieren von Stückgutteilen, mit mindestens einem ersten, oder kleinen, Transportbehälter (20) mit einer ersten Länge (L1) und einer ersten Breite (B1), die kleiner als die erste Länge (L1) ist, und mit mindestens einem zweiten, oder großen, Transportbehälter (22) mit einer zweiten Länge (L2) und einer zweiten Breite (B2), die kleiner als die zweite Länge (L2) ist, wobei die zweite Länge (L2) größer als die erste Länge (L1) ist, mit einer oder mehreren Fahreinheiten (2), die jeweils ein Lastaufnahmemittel (6) zum Aufnehmen eines Transportbehälters (20, 22) aufweisen, wobei die Fahreinheiten (2) entlang einer Förderbahn (10) in oder entgegen einer Förderrichtung (12) verfahrbar sind, mit mindestens einer Aufgabeeinrichtung (30) zum Aufgeben eines leeren oder mit einem Stückgutteil beladenen Transportbehälters (20, 22) auf das Lastaufnahmemittel (6) einer Fahreinheit (2), und mindestens einer Abgabeeinrichtung (30) zum Abgeben eines leeren oder mit einem Stückgutteil beladenen Transportbehälters (20, 22) von einem Lastaufnahmemittel (6) einer Fahreinheit (2), wobei jeweils mindestens zwei erste Transportbehälter (20) auf einem Lastaufnahmemittel (6) einer Fahreinheit (2) mit ihrer Längserstreckung quer zur Förderrichtung (12) nebeneinander aufnehmbar sind, oder jeweils ein zweiter Transportbehälter (22) auf einem Lastaufnahmemittel (6) einer Fahreinheit (2) mit seiner Längserstreckung in Förderrichtung (12) aufnehmbar ist, wobei jede Fahreinheit (2) mit ersten Haltemitteln (18) und jeder Transportbehälter (20, 22) mit zweiten Haltemitteln versehen ist, und die ersten Haltemittel (18) zum Zusammenwirken entweder mit den zweiten Haltemitteln eines oder mehrerer quer zur Förderrichtung aufgenommener kleiner Transportbehälter (20) oder mit den zweiten Haltemitteln eines in Förderrichtung aufgenommenen großen Transportbehälters (22) und zum Beschränken einer Bewegung eines aufgenommenen Transportbehälters (20, 22) in oder quer zur Förderrichtung (12) relativ zu dem Lastaufnahmemittel (6) auf ein vorgegebenes Maß ausgebildet sind.

2. Fördersystem nach Anspruch 1, **dadurch gekennzeichnet, dass** die ersten Haltemittel (18) zum formschlüssigen Zusammenwirken mit den zweiten Haltemitteln ausgebildet sind.

3. Fördersystem nach Anspruch 1 oder 2, **dadurch gekennzeichnet, dass** die ersten Haltemittel (18) von dem Lastaufnahmemittel (6) vertikal nach oben abstehende erste Halte- oder Rastelemente umfassen.

4. Fördersystem nach einem der vorangehenden Ansprüche, **dadurch gekennzeichnet, dass** die zweiten Haltemittel komplementär zu den ersten Haltemitteln geformt sind und zu den ersten Halteelementen komplementär geformte zweite Halteelemente umfassen können.

5. Fördersystem nach einem der vorangehenden Ansprüche, **dadurch gekennzeichnet, dass** die ersten Haltemittel in Förderrichtung verlaufende Seitenwangen umfassen, deren lichter Abstand größer als die erste Länge (L1) oder die zweite Breite (B2) sein kann, und zwar das größere dieser beiden Maße, und/oder quer zur Förderrichtung (12) verlaufende Begrenzungswände, deren lichter Abstand größer als ein Mehrfaches, insbesondere Zweifaches, der ersten Breite (B1) oder größer als die zweite Länge (L2) sein kann, und zwar das größere dieser beiden Maße.

6. Fördersystem nach einem der vorangehenden Ansprüche, **dadurch gekennzeichnet, dass** die ersten Haltemittel (18) und die zweiten Haltemittel so ausgebildet sind, dass entweder mehrere, insbesondere zwei quer angeordnete kleine Transportbehälter (20) oder ein in Längsrichtung angeordneter großer Transportbehälter (22) auf dem Lastaufnahmemittel (6) aufnehmbar ist, wobei die ersten Haltemittel formschlüssig mit den zweiten Haltemitteln zusammenwirken.

7. Fördersystem nach einem der vorangehenden Ansprüche, **dadurch gekennzeichnet, dass** die Aufgabeeinrichtung (30) ein Paar von parallelen, einander mit Abstand gegenüberliegenden und oberhalb der Förderbahn (10) angeordneten ersten Zuführbahnen (32) aufweist, auf denen kleine Transportbehälter (20) quer zur Förderrichtung (12) ausgerichtet in oder entgegen der Förderrichtung (12) förderbar und an einem Endbereich (34) der ersten Zuführbahnen (32) auf eine darunter fahrende Fahreinheit (2) aufgebbar sind, und ein Paar von parallelen, einander mit Abstand gegenüberliegenden, unter und zwischen den ersten Zuführbahnen (32) und oberhalb der Förderbahn (10) angeordneten zweiten Zuführbahnen (36), auf denen große Transportbehälter (22) in Förderrichtung (12) ausgerichtet in oder entgegen der Förderrichtung (12) förderbar und an den Endbereichen (34) auf eine darunter fahrende Fahreinheit (2) aufgebbar sind.

8. Fördersystem nach einem der vorangehenden Ansprüche, **dadurch gekennzeichnet, dass** die Abgabeeinrichtung (30) ein Paar von parallelen, einander mit Abstand gegenüberliegenden und oberhalb der Förderbahn (10) angeordneten ersten Zuführbahnen (32) aufweist, auf denen kleine Transportbehälter (20) quer zur Förderrichtung (12) ausgerichtet in oder entgegen der Förderrichtung (12) förderbar und an einem Endbereich (34) der ersten Zuführbahnen (32) von einer darunter fahrenden Fahreinheit (2) abgebbar sind, und ein Paar von parallelen, einander mit Abstand gegenüberliegenden, unter und zwischen den ersten Zuführbahnen (32) und oberhalb der Förderbahn (10) angeordneten zweiten Zuführbahnen (36), auf denen große Transportbehälter (22) in Förderrichtung (12) ausgerichtet in oder entgegen der Förderrichtung (12) förderbar und an den Endbereichen (34) von einer darunter fahrenden Fahreinheit (2) abgebbar sind.

9. Fördersystem nach Anspruch 7 oder 8, **dadurch gekennzeichnet, dass** die zweiten Zuführbahnen (36) in einem Übergangsbereich (50) an einem Übergangspunkt (38) auf eine gleiche Förderhöhe wie die ersten Zuführbahnen (32) geführt sind.

10. Fördersystem nach einem der Ansprüche 7 bis 9, **dadurch gekennzeichnet, dass** seitlich außerhalb der ersten Zuführbahnen (32) Leiteinrichtungen (44) für quer angeordnete kleine Transportbehälter (20) angeordnet sind, deren gegenseitiger Abstand größer als die erste Länge (L1) ist.

11. Fördersystem nach einem der Ansprüche 7 bis 10, **dadurch gekennzeichnet, dass** innerhalb oder zwischen den zweiten Zuführbahnen (36) Leiteinrichtungen (42) für in Förderrichtung (12) angeordnete große Transportbehälter (22) angeordnet sind, deren gegenseitiger Abstand größer als die zweite Breite (B2) ist.

12. Verfahren zum Transportieren von Stückgutteilen unter Verwendung eines Fördersystems nach einem der vorangehenden Ansprüche, wobei an einer Aufgabeeinrichtung (30) entweder mindestens ein erster Transportbehälter (20) in Ausrichtung quer zur Förderrichtung (12) oder ein zweiter Transportbehälter (22) in Ausrichtung in Förderrichtung (12) auf ein Lastaufnahmemittel (6) einer Fahreinheit (2) aufgegeben wird, die Fahreinheit (2) zu einer Abgabeeinrichtung (30) gefahren und an dieser der mindestens eine Transportbehälter (20, 22) abgegeben wird.

13. Verfahren nach Anspruch 12, **dadurch gekennzeichnet, dass** in Abhängigkeit von einem zulässigen Gesamtgewicht einer mit mindestens einem Transportbehälter beladenen Fahreinheit zur Vermeidung einer Gewichtsüberschreitung nur ein kleiner Transportbehälter (20) auf eine Fahreinheit (2) aufgegeben wird, wobei das Gewicht der auf die kleinen Transportbehälter (20) zu ladenden oder geladenen Stückgutteile oder das Gewicht der mit Stückgutteilen beladenen kleinen Transportbehälter vor dem Aufgeben auf eine Fahreinheit erfasst werden kann.

## Claims

1. Conveyor system for transporting goods items, with at least one first, or small, transport container (20) having a first length (L1) and a first width (B1) that is smaller than the first length (L1), and at least one second, or large, transport container (22) having a second length (L2) and a second width (B2) that is smaller than the second length (L2), wherein the second length (L2) is greater than the first length (L1), with one or more transport units (2) which in each case have a load-carrying means (6) for accommodating a transport container (20, 22),
wherein the transport units (2) can be moved along a conveyor track (10) in or counter to a direction of conveyance (12), with at least one feeder facility (30) for feeding a transport container (20, 22) that is empty or laden with a goods item onto the load-carrying means (6) of a transport unit (2),
and at least one dispensing facility (30) for dispensing a transport container (20, 22) that is empty or laden with a goods item from a load-carrying means (6) of a transport unit (2),
wherein in each case at least two first transport containers (20) can be accommodated next to one another on a load-carrying means (6) of a transport unit (2) with their longitudinal extension crosswise to the direction of conveyance (12), or in each case a second transport container (22) can be accommodated on a load-carrying means (6) of a transport unit (2) with its longitudinal extension in the direction of conveyance (12),
wherein each transport unit (2) is equipped with first holding means (18) and each transport container (20, 22) is equipped with second holding means, with the first holding means (18) being designed to interact either with the second holding means of one or more small transport containers (20) accommodated crosswise to the direction of conveyance, or with the second holding means of a large transport container (22) accommodated in the direction of conveyance, and to restrict the movement of an accommodated transport container (20, 22) in or crosswise to the direction of conveyance (12) to a specified extent relative to the load-carrying means (6).

2. Conveyor system according to claim 1, **characterised in that** the first holding means (18) are designed to interact in an interlocking manner with the second holding means.

3. Conveyor system according to claim 1 or 2, **characterised in that** the first holding means (18) comprise first holding or catch elements that project vertically upwards from the load-carrying means (6).

4. Conveyor system according to one of the preceding claims, **characterised in that** the second holding means are formed complementarily to the first holding means and can comprise second holding elements that are formed complementarily to the first holding elements.

5. Conveyor system according to one of the preceding claims, **characterised in that** the first holding means comprise side walls that run in the direction of conveyance, whose clear distance can be greater than the first length (L1) or the second width (B2), and namely the greater of these two dimensions, and/or boundary walls that run crosswise to the direction of conveyance (12), whose clear distance can be greater than a multiple of, in particular double, the first width (B1) or greater than the second length (L2), and namely the greater of these two dimensions.

6. Conveyor system according to one of the preceding claims, **characterised in that** the first holding means (18) and the second holding means are designed such that either several, in particular two, small transport containers (20) arranged crosswise or a large transport container (22) arranged in the longitudinal direction can be accommodated on the load-carrying means (6), wherein the first holding means interact in an interlocking manner with the second holding means.

7. Conveyor system according to one of the preceding claims, **characterised in that** the feeder facility (30) has a pair of parallel first feed tracks (32) arranged spaced apart opposite one another and above the conveyor track (10), on which small transport containers (20) aligned crosswise to the direction of conveyance (12) can be transported in or counter to the direction of conveyance (12) and, at an end section (34) of the first feed tracks (32), can be discharged onto a transport unit (2) running beneath, and a pair of parallel second feed tracks (36) arranged spaced apart opposite one another and below and between the first feed tracks (32) and above the conveyor track (10), on which large transport containers (22) aligned in the direction of conveyance (12) can be transported in or counter to the direction of conveyance (12) and, at the end sections (34), can be discharged onto a transport unit (2) running beneath.

8. Conveyor system according to one of the preceding claims, **characterised in that** the dispensing facility (30) has a pair of parallel first feed tracks (32) arranged spaced apart opposite one another and above the conveyor track (10), on which small transport containers (20) aligned crosswise to the direction of conveyance (12) can be transported in or counter to the direction of conveyance (12) and, at an end section (34) of the first feed tracks (32), can be delivered by a transport unit (2) running beneath, and a pair of parallel second feed tracks (36) arranged spaced apart opposite one another, below and between the first feed tracks (32) and above the conveyor track (10), on which large transport containers (22) aligned in the direction of conveyance (12) can be transported in or counter to the direction of conveyance (12) and, at the end sections (34), can be delivered by a transport unit (2) running beneath.

9. Conveyor system according to claim 7 or 8, **characterised in that** in a transitional section (50), at a transition point (38) the second feed tracks (36) are led to the same conveyance height as the first feed tracks (32).

10. Conveyor system according to one of the claims 7 to 9, **characterised in that** arranged laterally outside the first feed tracks (32) are guide devices (44) for small transport containers (20) arranged crosswise, whose distance from one another is greater than the first length (L1).

11. Conveyor system according to one of the claims 7 to 10, **characterised in that** arranged within or between the second feed tracks (36) are guide devices (42) for large transport containers (22) arranged in the direction of conveyance (12), whose distance from one another is greater than the second width (B2).

12. Method for transporting goods items using a conveyor system according to one of the preceding claims, wherein at a feeder facility (30) either at least one first transport container (20) aligned crosswise to the direction of conveyance (12) or a second transport container (22) aligned in the direction of conveyance (12) is delivered to a load-carrying means (6) of a transport unit (2), the transport unit (2) is moved to a dispensing facility (30) to which the at least one transport container (20, 22) is delivered.

13. Method according to claim 12, **characterised in that** depending on a total permitted weight of a transport unit laden with at least one transport container, to avoid a weight limit being exceeded only a small transport container (20) is delivered to a transport unit (2), wherein the weight of the goods items that are loaded or are to be loaded onto the small transport containers (20) or the weight of the small transport containers laden with goods items can be recorded before discharge onto a transport unit.

## Revendications

1. Un système de convoyage conçu pour assurer le transport de marchandises et comportant au moins un premier ou petit conteneur de transport (20) qui a une première longueur (L1) et une première largeur (B1) qui est inférieure à la première longueur (L1), et au moins un deuxième ou grand conteneur de transport (22) qui a une deuxième longueur (L2) et une deuxième largeur (B2) qui est inférieure à la deuxième longueur (L2), et cette deuxième longueur (L2) est plus importante que la première longueur (L1), avec un ou plusieurs groupes de transport (2) qui, dans chaque cas, ont un dispositif d'acheminement de charges (6) qui sont en mesure de recevoir un conteneur de transport (20, 22),
et ces groupes de transport (2) peuvent se déplacer le long d'une voie d'acheminement (10) dans le sens d'acheminement (12) ou dans le sens inverse, avec au moins un dispositif de chargement (30) qui permet de charger un conteneur de transport (20, 22) qui est vide ou ou a des marchandises sur le dispositif d'acheminement de charges (6) ou un groupe de transport (2),
et au moins un dispositif de distribution (30) qui permet d'assurer la distribution d'un conteneur de transport (20, 22) qui est vide ou a des marchandises depuis un dispositif d'acheminement de charges (6) d'un groupe de transport (2),
et, dans chaque cas, au moins deux premiers conteneurs de transport (20) peuvent être positionnés côte à côte sur un dispositif d'acheminement de charges (6) d'un groupe de transport (2) avec leur extension longitudinale implantée en travers du sens d'acheminement (12) ou, dans chaque cas, un deuxième conteneur de transport (22) peut être positionné sur un dispositif d'acheminement de charges (6) d'un groupe de transport (2) avec son extension longitudinale dans le sens de l'acheminement (12),
et chaque groupe de transport (2) est équipé de premiers dispositifs d'immobilisation (18) et chaque conteneur de transport (20, 22) est équipé de deuxièmes dispositifs d'immobilisation, et les premiers dispositifs d'immobilisation (18) sont conçus pour assurer une interaction avec les deuxièmes dispositifs d'immobilisation ou un ou plusieurs petits conteneurs de transport (20) implantés en travers du sens d'acheminement ou avec les deuxièmes dispositifs d'immobilisation d'un gros conteneur de transport (22) implantés dans le sens de l'acheminement, et pour limiter tout mouvement d'un conteneur de transport (20, 22) implanté dan le sens d'acheminement ou en travers de ce sens (12) sur une distance spécifiée par rapport aux dispositifs d'acheminement de charges (6).

2. Le système de convoyage que décrit la revendication 1, si ce n'est que les premiers dispositifs d'immobilisation (18) sont conçus pour assurer une interaction du type verrouillage de sécurité par rapport aux deuxièmes dispositifs d'immobilisation.

3. Le système de convoyage que décrit la revendication 1 ou 2, si ce n'est que les premiers dispositifs d'immobilisation (18) comportent les premiers éléments d'immobilisation ou de saisie qui font saillie sur le plan vertical et vers le haut par rapport aux dispositifs d'acheminement de charges (6).

4. Le système de convoyage que décrit l'une ou l'autre des revendications précédentes, si ce n'est que les deuxièmes dispositifs d'immobilisation viennent compléter les premiers dispositifs d'immobilisation et peuvent comporter des deuxièmes éléments d'immobilisation qui viennent compléter les premiers éléments d'immobilisation.

5. Le système de convoyage que décrit l'une ou l'autre des revendications précédentes, si ce n'est que les premiers dispositifs d'immobilisation comportent des parois latérales qui sont implantées dans le sens de l'acheminement, et que le dégagement peut être supérieur à la première longueur (L1) ou la deuxième largeur (B2) et, à savoir, la plus grande de ces deux dimensions, et (ou) les parois périphériques qui sont implantées en travers du sens d'acheminement (12), dont le dégagement peut être supérieur à un multiple, en particulier au double, de la première largeur (B1) ou supérieur à la deuxième longueur (L2), et, à savoir, la plus grande de ces deux dimensions.

6. Le système de convoyage que décrit l'une ou l'autre des revendications précédentes, si ce n'est que les premiers dispositifs d'immobilisation (18) et les deuxièmes dispositifs d'immobilisation sont conçus de la manière suivante : plusieurs, et en particulier deux, petits conteneurs de transport (20) sont disposés en travers ou un gros conteneur de transport (22) est disposé dans le sens longitudinal et peut ou peuvent être implantés sur les dispositifs d'acheminement de charges (6), et les premiers dispositifs d'immobilisation assurent une interaction du type verrouillage de sécurité par rapport aux deuxièmes dispositifs d'immobilisation.

7. Le système de convoyage que décrit l'une ou l'autre des revendications précédentes, si ce n'est que le dispositif de chargement (30) a une paire de premières voies parallèles de chargement (32) qui sont disposées et espacées face à face et au-dessus de la voie d'acheminement (10), sur laquelle de petits conteneurs de transport (20) alignés en travers du sens d'acheminement (12) peuvent être transportés dans le sens d'acheminement (12) ou dans le sens inverse, au niveau d'une section d'extrémité (34) des premières voies de chargement (32), peuvent être déchargés sur un groupe de transport (2) qui circule au-dessous, et une paire de deuxièmes voies parallèles de chargement (36) qui sont disposées et espacées face à face et au-dessous et entre les premières voies de chargement (32) et au-dessus de la voie d'acheminement (10), sur laquelle de gros conteneurs de transport (22) alignés dans le sens d'acheminement (12) peuvent être transportés dans le sens d'acheminement (12) ou dans le sens inverse et, au niveau des sections d'extrémité (34), peuvent être déchargés sur un groupe de transport (2) qui circule au-dessous.

8. Le système de convoyage que décrit l'une ou l'autre des revendications précédentes, si ce n'est que le dispositif de distribution (30) a une paire de premières voies parallèles de chargement (32) qui sont disposées et espacées face à face et au-dessus de la voie d'acheminement (10), sur laquelle de petits conteneurs de transport (20) alignés en travers du sens d'acheminement (12) peuvent être transportés dans le sens d'acheminement (12) ou dans le sens inverse et, au niveau d'une section d'extrémité (34) des premières voies de chargement (32), peuvent être livrés par un groupe de transport (2) qui circule au-dessous, et une paire de deuxièmes voies parallèles de chargement (36) qui sont disposées et espacées face à face et au-dessous et entre les premières voies de chargement (32) et au-dessus de la voie d'acheminement (10), sur laquelle de gros conteneurs de transport (22) alignés dans le sens d'acheminement (12) peuvent être transportés dans le sens d'acheminement (12) ou dans le sens inverse et, au niveau des sections d'extrémité (34), peuvent être livrés par un groupe de transport (2) qui circule au-dessous.

9. Le système de convoyage que décrit la revendication 7 ou 8, si ce n'est que, dans une section de transition (50), au niveau d'un point de transition (38), les deuxièmes voies de chargement (36) aboutissent à la même hauteur d'acheminement que les premières voies de chargement (32).

10. Le système de convoyage que décrit l'une ou l'autre des revendications 7 à 9, si ce n'est qu'implantés latéralement, à l'extérieur des premières voies de chargement (32), il y a des dispositifs de guidage (44) conçus pour les petits conteneurs de transport (20) et disposés en travers, avec un écart entre eux supérieur à la première longueur (L1).

11. Le système de convoyage que décrit l'une ou l'autre des revendications 7 à 10, si ce n'est qu'implantés à l'intérieur des deuxièmes voies de chargement (36) ou entre ces dernières, il y a des dispositifs de guidage (42) conçus pour les gros conteneurs de transport (22) et disposés dans le sens de l'acheminement (12), avec un écart entre eux supérieur à la deuxième largeur (B2).

12. Le procédé de transport de marchandises en faisant appel à un système de convoyage que décrit l'une ou l'autre des revendications précédentes, et au niveau d'un dispositif de chargement (30), il y a au moins un premier conteneur de transport (20) disposé en travers par rapport au sens d'acheminement (12) ou un deuxième conteneur de transport (22) aligné dans le sens d'acheminement (12) est livré à un dispositif d'acheminement de charges (6) d'un groupe de transport (2), et ce groupe de transport (2) aboutit à un dispositif de distribution (30) auquel est livré au moins un conteneur de transport (20, 22).

13. Le procédé que décrit la revendication 12 et qui se **caractérise par le fait que**, en fonction du poids total autorisé d'un groupe chargé de transport, avec au moins un conteneur de transport, pour éviter tout dépassement d'un poids limite, un seul petit conteneur de transport (20) est livré à un groupe de transport (2), et le poids des marchandises qui sont chargées ou doivent être chargées sur les petits conteneurs de transport (20) ou le poids des petits conteneurs de transport chargés de marchandises peut être enregistré avant la décharge sur un groupe de transport.
